# EUROPEAN PATENT APPLICATION

(11) **EP 1 775 464 A2**
(43) Date of publication of application: **18.04.2007**
(21) Application number: 06380252.4
(22) Date of filing: 22.09.2006
(51) Int. Cl.: F03D 1/06

(54) **Wind turbine with noise-reducing blade rotor**

(30) Priority: 22.09.2005 ES 200502304
(71) Applicant: Gamesa Innovation & Technology, S.L. Unipersonal, 31013 Pamplona (ES)
(72) Inventor: Llorente Gonzalez, Jose Ignacio, 31013 Pamplona (Navarra) (ES)

(57) **Abstract**

Wind turbine with a blade rotor (11) which reduces noise by the inclusion of a set (21) of flexible bristles (23), aligned in at least one row, on the trailing edge (15) of the aerodynamic profile of the blades (11) and protruding over it, which allows the pressure fluctuations to be balanced on both sides of the profile of each blade (11) in the direction of the wind flow.

## Description

### INVENTION FILED

This invention refers to a wind turbine with a blade rotor that has elements on its trailing edge that reduce the aerodynamic noise produced when the force of the wind turns the rotor.

### INVENTION BACKGROUND

Wind turbines produce a significant amount of noise. Their blades produce aerodynamic noise through the interaction of the boundary layer with the trailing edge of the blade.

In the previous technique, noise reduction was proposed by supplying the trailing edge of the rotor blades with a toothed element.

Patent EP0652367 proposes different types of toothed edges for rotor blades.

Patent EP1314885 proposes rotor blades with tooth shaped panels on the trailing edge.

Patent EP1338793 proposes blades with toothed edges, varying the length of the teeth and the distance between them along the blade.

These solutions have the drawback that as the teeth are rigid elements, there will be occasions when they are not aligned with the flow, which may produce a high noise index at elevated frequencies.

This invention provides a different to reduce the noise produced by the wind turbines.

### SUMMARY OF THE INVENTION

The objective of this invention is to reduce the noise produced as a consequence of the interaction of the boundary layer with the trailing edge of the rotor blades of a wind turbine, in a wind turbine that consists of a blade rotor that drives an electric generator, with blades that have an aerodynamic profile with a leading edge and a trailing edge.

The noise spectrums in relation to frequency show that the most important frequencies for wind turbines noise production are between the 500-1000 Hz range.

In order to achieve this objective, the invention provides at least one of the blades with a set of flexible bristles, aligned in at least one row, protruding over the trailing edge.

This set of bristles, preferably arranged in the form of a brush, reduces the discontinuity caused by the trailing edge of the blade, which generates the noise as a consequence of pressure fluctuations caused by the turbulence of the boundary layer when passing the trailing edge.

Due to their flexibility, these bristles allow the pressures to be balanced, therefore eliminating the acoustic radiation effect of the trailing edge.

One important advantage of using the flexible bristle technique instead of the toothed elements lies in its automatic orientation in relation to the flow of the trailing edge of the blade. This means that they are effective in a wide range of flow conditions.

This technique therefore provides a noise-reducing element for wind turbines that is simple, low cost, easy to assemble and implies no significant increase in weight.

Other characteristics and advantages of this invention become apparent in the detailed description and the accompanying figures that follow.

### DESCRIPTION OF FIGURES

Figure 1 shows a plan view of the rotor blade with a set of flexible bristles as per the invention.
Figures 2a and 2b show a schematic view of a transversal section of a blade as per the invention with a set of bristles aligned with the upper trailing edge and the lower trailing edge respectively.
Figure 3 is a schematic view of a set of bristles fixed to a support in the form of a brush which may be applied to the trailing edge of a blade as per the invention.
Figure 4 is a schematic view of the fixture of a brush as illustrated in Figure 3 to the lower surface of the trailing edge of a blade as per the invention.

### DETAILED DESCRIPTION OF THE INVENTION

According to the invention, the wind turbine comprises a rotor with at least one blade 11 with a leading edge 13 and a trailing edge 15 which includes a set 21 of flexible bristles 23, preferably made from a polymeric material, specifically, propylene PP.

The set 21 of bristles is placed on the trailing edge 15 at the end of the blade 11, reaching the tip 17, along a length L1 which is preferably less than 40% of the total length of the blade, as this is the area where the majority of the aerodynamic noise is produced.

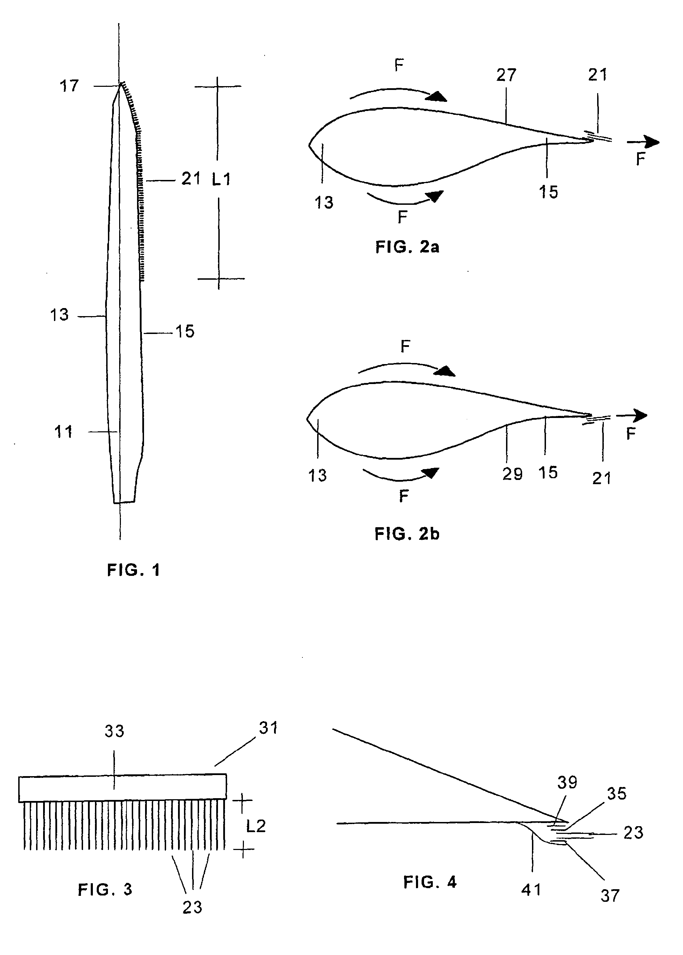

The bristles 23 of the set 21 are preferably arranged to form a right angle lengthways with the trailing edge 15 as shown in figure 1. In the transversal direction, the bristles 23 may be aligned with the upper surface 27 of the trailing edge 15 or with the lower surface as shown in Figures 2a and 2b respectively.

The set 21 can be formed by blocks 31 of bristles 23 fixed to a support 33 in the form of a brush. In a preferable embodiment, this support is comprised of two tapes 35, 37 which use an adhesive element 39 to facilitate the placement on the trailing edge. This fixture may itself incorporate a smoothing tape 41 to avoid any discontinuity in the aerodynamic profile.

Preferably, bristles of a constant length shall be used, depending on the blade radius and chord, although it contemplates the possibility of using variable lengths in specific areas of the blade 11. For a 24 m. blade, the appropriate length L2 is estimated at around 8 cm.

The set 21 is formed by bristles 23 aligned in at least one row. The bristles 23 preferably have a circular section diameter of between 0.4 and 0.5 mm. The separation between these bristles shall be the minimum possible. At this point, the key element in the sizing of the set 21 is that, for a prefixed bristle thickness according to the flexibility requirements, the amount per surface unit of the set 21 allows the pressure fluctuations to be balanced on both sides in the flow F direction.

From the tests carried out by the applicant, it is expected that the application of sets 21 of bristles 23 on the blades 11 of wind turbines reduced noise by approximately 10 db.

The modifications contained within the scope defined by the following vindications may be applied to the embodiment which we have just described.

## Claims

**1.** Wind turbine which comprises a blade rotor that drives an electrical generator, having aerodynamic profile blades (11) with a leading edge (13) and a trailing edge (15), **characterised by** the fact that at least one of the blades (11) has a set (21) of flexible bristles (23), aligned in at least one row, protruding over the trailing edge (15) in order to reduce the noise produced during the movement of the rotor on interaction with the wind.

**2.** Wind turbine as per vindication 1, **characterised by** the fact that these flexible bristles (23) form a 90° angle with the edge of the blade (11) in a lengthways direction.

**3.** Wind turbine as per vindications 1 or 2, **characterised by** the fact that the set (21) of flexible bristles (23) is arranged along all of the blade (11). 4.- Wind turbine as per vindications 1 or 2, **characterised by** the fact that the set (21) of flexible bristles (23) is arranged along part of the blade (11) at a length L1 of less that 40% of the total radius of the blade, reaching the tip (17).

**5.** Wind turbine as per any of vindications 1-4, **characterised by** the fact that the set (21) of flexible bristles (23) is aligned with the upper surface (27) of the trailing edge (15).

**6.** Wind turbine as per any of vindications 1-4, **characterised by** the fact that the set (21) of flexible bristles (23) is aligned with the lower surface (29) of the trailing edge (15).

**7.** Wind turbine as per any of vindications 1-6, **characterised by** the fact that the set (21) of flexible bristles (23) is arranged in the form of a brush (31) with a support (33) to which the bristles (23)are fixed.

**8.** Wind turbines as per vindication 7, **characterised by** that fact that this support (33) comprises two tapes (35, 37) and an adhesive element (39) as a method for fixing to the blade (11).

**9.** Wind turbine as per any of vindications 1-8, **characterised by** the fact that, for a determined bristle (23) thickness, the amount per surface unit of the set (21) allows pressure fluctuations to be balanced on both sides in the flow (F) direction.

**10.** Wind turbine as per vindication 9, **characterised by** the fact that the flexible bristles (23) have a circular section diameter of between 0.4 and 0.5 mm.

**11.** Wi nd turbine as per any of vindications 1-10, **characterised by** the fact that the flexible bristles (23) have a constant length (L2) along the blade (11).

**12.** Wind turbine as per vindication 11, **characterised by** the fact that on blades of a radius greater than or equal to 24m. the flexible bristles (23) have a length (L2) which is greater than or equal to 8 cm.

**13.** Wind turbine as per any of vindications 1-10, **characterised by** the fact that the flexible bristles (23) have a variable length (L2) along the blade (11).

**14.** Wind turbine as per any of vindications 1-13 **characterised by** the fact that the flexible bristles (23) are made from a polymeric material.

**15.** Wind turbine as per vindication 14, **characterised by** the fact that the flexible bristles (23) are made from polypropylene (PP).
